# EUROPEAN PATENT SPECIFICATION

(11) **EP 4 589 716 B1**
(45) Date of publication and mention of the grant of the patent: **18.11.2026**
(21) Application number: 23907835.5
(22) Date of filing: 21.12.2023
(51) Int. Cl.: H01M 10/0587, H01M 4/66, H01M 4/36, H01M 4/48, H01M 4/587, H01M 10/0525, H01M 4/02

(54) **ELECTRODE ASSEMBLY AND LITHIUM SECONDARY BATTERY INCLUDING THE SAME**
ELEKTRODENANORDNUNG UND LITHIUMSEKUNDÄRBATTERIE DAMIT
ENSEMBLE ÉLECTRODE ET BATTERIE SECONDAIRE AU LITHIUM COMPRENANT CELUI-CI

(30) Priority: 21.12.2022 KR 20220181141; 20.12.2023 KR 20230187626
(43) Date of publication of application: 23.07.2025
(60) Divisional application: 26208305.8
(73) Proprietor: LG Energy Solution, Ltd., Seoul 07335 (KR)
(72) Inventor: JANG, Jin Su, Daejeon 34122 (KR); JEGAL, Jong Pil, Daejeon 34122 (KR); LEE, Yun Ju, Daejeon 34122 (KR); PARK, Sung Kwan, Daejeon 34122 (KR); JEON, Hyung Joon, Daejeon 34122 (KR)
(74) Representative: Goddar, Heinz J.
(86) International application number: PCT/KR2023/021340
(87) International publication number: WO 2024/136552

(56) References cited:
- WO-A1-2022/000273
- KR-A- 20170 043 240
- KR-A- 20200 119 199
- KR-A- 20220 023 367
- KR-A- 20220 057 713
- KR-A- 20220 072 353

## Description

### [Technical Field]

### CROSS-REFERENCE TO RELATED APPLICATIONS

This application claims the benefit of priority to Korean Patent Application No. 10-2022-0181141 filed on December 21, 2022.

### [Technical Field]

The present invention relates to an electrode assembly and a lithium secondary battery including the same.

### [Background Art]

With the development of technology for electric vehicles, portable electronic devices, and the like, the demand for lithium secondary batteries as an energy source is rapidly increasing.

The lithium secondary batteries can be classified into cylindrical, prismatic, and pouch-type batteries according to the battery case type. Among them, the cylindrical battery has a form in which an electrode assembly is accommodated in a cylindrical battery can and then sealed by covering the top of the battery can with a cap plate, wherein the electrode assembly is manufactured by sequentially stacking a sheet-shaped positive electrode, a separator, and a negative electrode and then winding them in one direction. The positive electrode and the negative electrode are provided with a positive electrode tab and a negative electrode tab having a strip shape, respectively, wherein the positive electrode tab and the negative electrode tab are connected to an electrode terminal to be electrically connected to an external power source. For reference, the positive electrode terminal is a cap plate, and the negative electrode terminal is a battery can. However, in the case of a conventional cylindrical battery having such a structure, there is a problem in that current is concentrated on the strip-shaped electrode tab, so that resistance is large, a lot of heat is generated, and current collecting efficiency is not good.

In this case, by applying a structure in which non-coated portions of the positive electrode and the negative electrode serve as the electrode tabs without forming separate electrode tabs (for example, a tab-less structure), it is possible to solve the problem that current is concentrated around the electrode tabs.

However, in the case of the electrode having a coated portion and a non-coated portion, there is a sliding region in which the loading amount decreases in the middle of moving from the coated portion to the non-coated portion. In general, since a size of the negative electrode is designed to be larger than that of the positive electrode, there is a region in which the sliding region of the negative electrode and an active material layer of the positive electrode face each other, wherein this region has a low NP ratio (negative electrode capacity/positive electrode capacity). In this region, if the NP ratio (negative electrode capacity/positive electrode capacity) is less than 100%, stability problems such as lithium precipitation may occur during operation of the secondary battery.

In order to solve the above problem, if the NP ratio is adjusted to be more than 100% even in the region where the sliding region of the negative electrode and the active material layer of the positive electrode face each other, the NP ratio in the center of the negative electrode must be designed to be much larger. In the case of such a design, a thickness of the negative electrode increases because the negative electrode loading amount should be increased. However, when the thickness of the negative electrode increases while keeping the outer diameter specification of the lithium secondary battery can constant, a length of the input electrode decreases, which may rather reduce cell capacity.

Accordingly, there is a need for technology for obtaining the maximum cell capacity in an electrode assembly including a negative electrode having a coated portion and a non-coated portion.

WO2022000273A1 discloses an electrode assembly with an electrode comprising active material in the lateral regions with decreasing thickness following a specific formula.

### [Disclosure]

### [Technical Problem]

The present invention seeks to provide a lithium secondary battery having maximum capacity by minimizing capacity loss caused by a reduced length of an electrode input into an electrode assembly while additionally using a region in which a sliding region of a negative electrode and an active material layer of a positive electrode face each other.

### [Technical Solution]

In order to solve the above problem, according to the present invention, which is defined in the claims, a thickness of a negative electrode active material layer in a negative electrode including a coated portion and a non-coated portion, a length of a positive electrode active material layer facing a first region where a thickness of a negative electrode active material layer is constant, a length of a positive electrode active material layer facing a second region (sliding region) where a thickness of a negative electrode active material layer decreases, and a slope of the starting portion of the sliding region are adjusted to satisfy a specific relationship.

Specifically, there is provided an electrode assembly for a cylindrical lithium secondary battery in which a positive electrode, a negative electrode, and a separator interposed between the positive electrode and the negative electrode are wound in one direction, wherein the positive electrode includes a positive electrode current collector and a positive electrode active material layer, wherein the negative electrode includes a non-coated portion in which a negative electrode active material layer is not formed on the negative electrode current collector, and a coated portion in which a negative electrode active material layer is formed on the negative electrode current collector, wherein the coated portion includes a first region where the thickness of the negative electrode active material layer is constant, and a second region where the thickness of the negative electrode active material layer decreases, and wherein the electrode assembly satisfies the following Equation (1):
Equation (1): $t \geq a \left(b+2c\right)$
wherein t is a thickness (mm) of the negative electrode active material layer in the first region, b is a length (mm) in which the first region and the positive electrode active material layer face each other, c is a length (mm) in which the second region and the positive electrode active material layer face each other, and a is a value represented by the following Equation (2):
Equation (2): $a = 0.1 t / Δx$
wherein △x is a longitudinal distance (mm) between a boundary point between the first region and the second region and a point where a thickness of the negative electrode active material layer in the second region is 0.9t.

In addition, there is provided a lithium secondary battery including: the above electrode assembly; an electrolyte; and a battery can accommodating the electrode assembly and the electrolyte.

### [Advantageous Effects]

The negative electrode in which the coated portion and the non-coated portion are formed has a sliding region. The sliding region is a region in which the loading amount of the negative electrode active material decreases, that is, a region in which the thickness of the negative electrode active material layer decreases. When this region is designed to face the positive electrode, the sliding region also contributes to the capacity of the secondary battery, so that the overall cell capacity can be expected to increase.

However, since the loading amount of the negative electrode in the sliding region is reduced, the N/P ratio (negative electrode capacity/positive electrode capacity) may be less than 100%, and when the N/P ratio is less than 100%, stability problems such as lithium deposition during the operation of the secondary battery are likely to occur. In order to solve the stability problems, the N/P ratio in the sliding region may not be less than 100% by increasing the thickness of the negative electrode to increase the N/P ratio in the center of the negative electrode. However, if the thickness of the negative electrode increases when an external specification of the lithium secondary battery is constant, the length of the input electrode assembly decreases, so that the overall cell capacity may be rather reduced.

As in the present invention, when a thickness of a negative electrode active material layer in a negative electrode, a length of a positive electrode active material layer facing a first region where a thickness of a negative electrode active material layer is constant, a length of a positive electrode active material layer facing a second region (sliding region) where a thickness of a negative electrode active material layer decreases, and a slope of the starting portion of the sliding region are adjusted to satisfy a specific relationship, there is an effect of minimizing the capacity loss caused by the reduced length of the electrode input into the electrode assembly while additionally using a region in which the sliding region of the negative electrode and the active material layer of the positive electrode face each other.

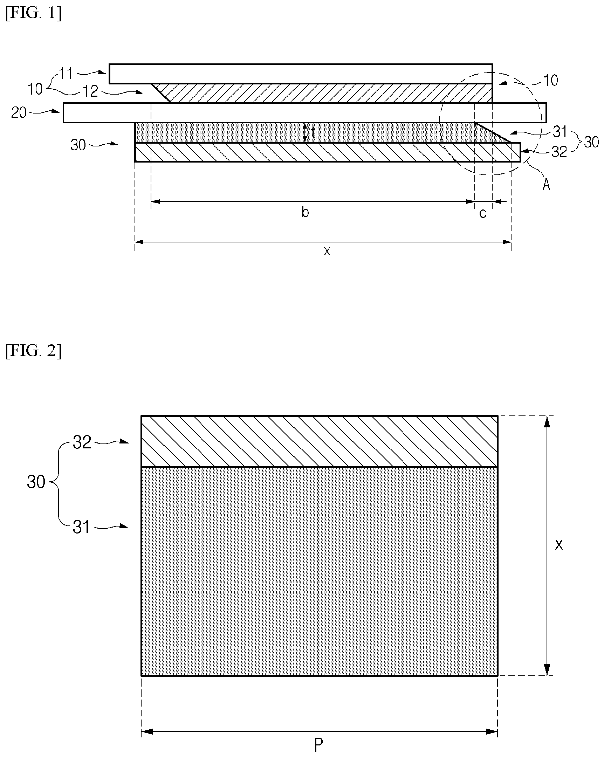

Specifically, when the length of the positive electrode is increased to increase the capacity of the lithium secondary battery, the negative electrode facing the longer positive electrode, particularly, the sliding region of the negative electrode, must also have an increased loading amount to prevent the NP ratio reversal. As the negative electrode sliding region and the positive electrode face each other more, there are problems such as a short circuit caused by the reversal of the NP ratio of the positive electrode and the negative electrode. To solve the problems, when the loading amount of the negative electrode increases, the thickness of the negative electrode increases as a result. In the case of a cylindrical or prismatic battery, since the size of the battery can is limited, the input length P of the negative electrode is reduced as the thickness of the negative electrode increases. For example, the input length of the negative electrode is indicated as P in FIG. 2, and means a length in the direction in which the negative electrode is wound.

Since it is difficult to design the positive electrode facing the negative electrode to have a larger region than the negative electrode due to the NP reversal risk, the input length of the positive electrode also decreases as the input length of the negative electrode decreases. In conclusion, when the input length of the positive electrode decreases, the overall capacity of the lithium secondary battery is reduced.

The present invention minimizes the reduction of the input length of the positive electrode while maximally utilizing the sliding region of the negative electrode, thereby exhibiting an effect of solving the stability problems caused by NP ratio reversal while allowing the lithium secondary battery to have the highest capacity.

In addition, the lithium secondary battery including the above has fewer defects due to disconnection and has excellent durability.

### [Description of Drawings]

FIG. 1 is a schematic diagram of a structure of an electrode assembly according to an embodiment of the present invention. FIG. 1 is a side view of an electrode assembly.
Fig. 2 is a plan view of a negative electrode 30 of Fig. 1.
FIG. 3 is an example of an enlarged view of region A of FIG. 1.
FIG. 4 is an example of an enlarged view of region A of FIG. 1.

### [Best Modes of the Invention]

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

The present invention relates to an electrode assembly for a lithium secondary battery in which a positive electrode, a negative electrode, and a separator interposed between the positive electrode and the negative electrode are wound in one direction, wherein the positive electrode includes a positive electrode current collector and a positive electrode active material layer, wherein the negative electrode includes a non-coated portion in which a negative electrode active material layer is not formed on the negative electrode current collector, and a coated portion in which a negative electrode active material layer is formed on the negative electrode current collector, wherein the coated portion includes a first region where the thickness of the negative electrode active material layer is constant, and a second region where the thickness of the negative electrode active material layer decreases, and wherein the electrode assembly satisfies the following Equation (1):
Equation (1): $t \geq a \left(b+2c\right)$
wherein t is a thickness (mm) of the negative electrode active material layer in the first region, b is a length (mm) in which the first region and the positive electrode active material layer face each other, c is a length (mm) in which the second region and the positive electrode active material layer face each other, and a is a value represented by the following Equation (2):
Equation (2): $a = 0.1 t / Δx$
wherein △x is a longitudinal distance (mm) between a boundary point between the first region and the second region and a point where a thickness of the negative electrode active material layer in the second region is 0.9t. The a in Equation (2) above refers to an average slope of the sliding region up to the region where the thickness of the negative electrode becomes 0.1.

When the thickness of the negative electrode active material layer, the length of the positive electrode active material layer facing the first region where the thickness of the negative electrode active material layer is constant, the length of the positive electrode active material layer facing the second region (sliding region) where the thickness of the negative electrode active material layer decreases, and the slope of the starting portion of the sliding region satisfy a specific relationship of Equation (1), the lithium secondary battery having maximum capacity can be provided by minimizing capacity loss caused by a reduction in the length of an input electrode while additionally using a region in which the sliding region of the negative electrode and the active material layer of the positive electrode face each other.

**In** Equation (1) above, the t is a thickness of the negative electrode active material layer in the center of the negative electrode active material layer or an average thickness of the negative electrode active material layer in the first region where the thickness of the negative electrode active material layer is constant. Since the actual thickness of the negative electrode may not be completely constant, a region having a constant thickness may have a thickness error within 0.05t.

The t may be 0.100 mm to 0.180 mm, preferably 0.120 mm to 0.160 mm, and most preferably 0.135 mm to 0.150 mm.

When the length of the negative electrode active material layer is x, the x may be 60 mm to 95 mm, preferably 65 mm to 90 mm, and most preferably 69 mm to 86 mm.

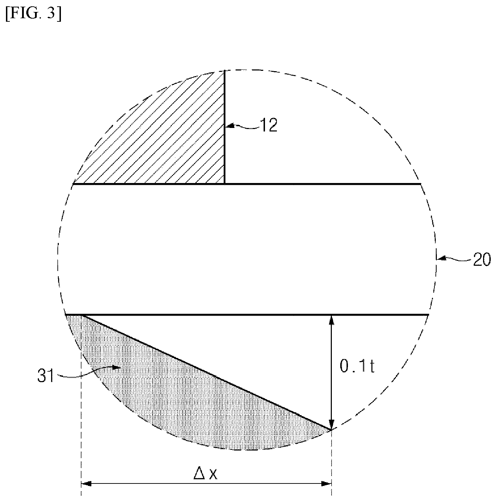

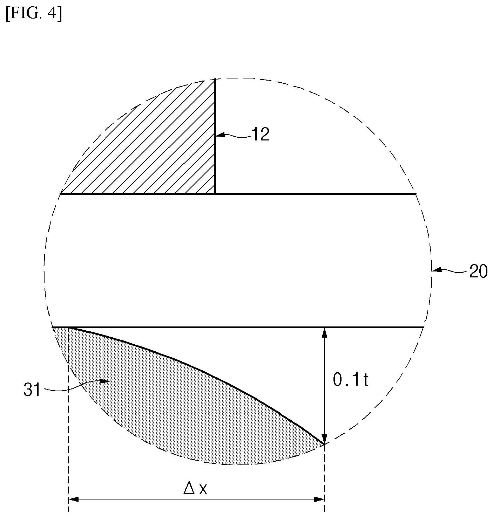

**In** Equation (1) above, the a is a value represented by the following Equation (2), and is an average slope of the portion where the thickness of the negative electrode active material layer begins to decrease at the end of the negative electrode current collector in the longitudinal direction. That is, the a refers to an average slope of the beginning of the sliding region (second region). The slope of the starting portion of the sliding region may decrease constantly as illustrated in FIG. 3, or may decrease irregularly as illustrated in FIG. 4. Equation (2): $a = 0.1 t / Δx$

In Equation (2), a may be 0.0001 to 0.01, preferably 0.0005 to 0.008, and most preferably 0.001 to 0.002.

In Equation (2), △x is a distance (mm) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t. The △x may be 1.5 mm to 20 mm, preferably 10 mm to 15 mm, and most preferably 12 mm to 13.5 mm.

In Equation (1), the b is a length (mm) of the positive electrode active material layer facing the first region where the thickness of the negative electrode active material layer is constant. The b may be 60 mm to 69 mm, preferably 64 mm to 66 mm, and most preferably 64.5 mm to 65.5 mm.

In Equation (1) above, the c is a length (mm) of the positive electrode active material layer facing the second region where the thickness of the negative electrode active material layer decreases, that is, a length in which the sliding region of the negative electrode and the active material layer of the positive electrode face each other. The c may be 0.1 mm to 5 mm, preferably 0.5 mm to 4.5 mm, and most preferably 1 mm to 4 mm.

In Equation (1) above, the c/b may be 0.22 or less, preferably 0.01 to 0.20, and most preferably 0.02 to 0.10.

The negative electrode included in the electrode assembly of the present invention includes: a negative electrode current collector; and a negative electrode active material layer located on the negative electrode current collector, wherein the negative electrode current collector includes a coated portion having a negative electrode active material layer formed on at least one surface thereof and a non-coated portion having no negative electrode active material layer formed on the negative electrode current collector.

The negative electrode active material layer may include a negative electrode active material, a conductive material, and a binder. Specifically, the negative electrode can be prepared by applying a negative electrode slurry to one or both surfaces of a long sheet-shaped negative electrode current collector, removing a solvent of the negative electrode slurry through a drying process, and then rolling the same, wherein the negative electrode slurry is prepared by dispersing a negative electrode active material, a conductive material, and a binder in a solvent such as dimethyl sulfoxide (DMSO), isopropyl alcohol, N-methyl pyrrolidone (NMP), acetone, water, etc. Meanwhile, the negative electrode including a non-coated portion may be prepared by not applying the negative electrode slurry to some region of the negative electrode current collector, for example, one end of the negative electrode current collector when the negative electrode slurry is applied.

As the negative electrode active material, a compound capable of reversible intercalation and de-intercalation of lithium may be used. Specific examples of the negative electrode active material may include carbonaceous materials such as artificial graphite, natural graphite, graphitized carbon fiber, amorphous carbon; silicon-based materials such as Si, Si-Me alloy (where Me is at least one selected from the group consisting of Al, Sn, Mg, Cu, Fe, Pb, Zn, Mn, Cr, Ti, and Ni), SiOy (where 0<y<2), and Si-C composites; lithium metal thin films; metal materials capable of alloying with lithium, such as Sn and Al; any one or a mixture of two or more thereof may be used.

Preferably, the negative electrode according to the present invention may include a silicon-based negative electrode active material. The silicon-based negative electrode active material may be Si, Si-Me alloy (where Me is at least one selected from the group consisting of Al, Sn, Mg, Cu, Fe, Pb, Zn, Mn, Cr, Ti, and Ni), SiOy (here, 0<y<2), Si-C composites, or a combination thereof, and preferably may be SiOy (here, 0<y<2). Since the silicon-based negative electrode active material has a high theoretical capacity, capacity characteristics can be improved when the silicon-based negative electrode active material is included.

Meanwhile, the silicon-based negative electrode active material may be doped with M^{b} metal, wherein the M^{b} metal may be a group 1 metal element, or a group 2 metal element, and specifically, Li, Mg, etc. Specifically, the silicon negative electrode active material may be Si, SiOy (where 0<y<2), Si-C composite, etc. doped with M^{b} metal. In the case of a metal-doped silicon-based negative electrode active material, the active material capacity is somewhat reduced due to the doped element, but has high efficiency, and thus, a high energy density can be realized.

In addition, the silicon-based negative electrode active material may further include a carbon coating layer on the surface of the particle. In this case, the carbon coating amount may be 20% by weight or less, preferably 1 to 20% by weight based on the total weight of the silicon-based negative electrode active material.

In addition, the negative electrode may further include a carbon-based negative electrode active material as a negative electrode active material, if necessary. The carbon-based negative electrode active material may be, for example, artificial graphite, natural graphite, graphitized carbon fiber, amorphous carbon, soft carbon, hard carbon, etc., but is not limited thereto.

Meanwhile, when a mixture of the silicon-based negative electrode active material and the carbon-based negative electrode active material is used as the negative electrode active material, a mixing ratio of the silicon-based negative electrode active material and the carbon-based negative electrode active material may be 1:99 to 20:80, preferably 1:99 to 15:85, and more preferably 1:99 to 10:90. Most preferably, the negative electrode active material is formed of a mixture of graphite and SiO, wherein the SiO is preferably included in an amount of 1 to 5% by weight based on the total weight of the negative electrode active material.

The negative electrode active material may be included in an amount of 80 to 99% by weight, preferably 85 to 99% by weight, more preferably 90 to 99% by weight, based on the total weight of the negative electrode active material layer.

Meanwhile, the negative electrode current collector may be any negative electrode current collector commonly used in the art, and may be, for example, copper, stainless steel, aluminum, nickel, titanium, fired carbon, copper or stainless steel that is surface-treated with carbon, nickel, titanium, silver, or the like, an aluminum-cadmium alloy, or the like, but most preferably a copper thin film.

The negative electrode current collector may typically have a thickness of 3 to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The conductive material is used to impart conductivity to the negative electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, carbon fiber, and carbon nanotube; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may usually be included in an amount of 1 to 30% by weight, preferably 1 to 20% by weight, more preferably 1 to 10% by weight, based on the total weight of the negative electrode active material layer.

The binder serves to improve the bonding between the negative electrode active material particles and the adhesion between the negative electrode active material and the negative electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and any one or a mixture of two or more thereof may be used. The binder may usually be included in an amount of 1 to 30% by weight, preferably 1 to 20% by weight, more preferably 1 to 10% by weight, based on the total weight of the negative electrode active material layer.

The positive electrode of the present invention includes a positive electrode current collector and a positive electrode active material layer. The positive electrode of the present invention can be prepared by applying a positive electrode slurry to one or both surfaces of a long sheet-shaped positive electrode current collector, removing a solvent of the positive electrode slurry through a drying process, and then rolling the same, wherein the positive electrode slurry is prepared by dispersing a positive electrode active material, a conductive material, and a binder in a solvent such as dimethyl sulfoxide (DMSO), isopropyl alcohol, N-methyl pyrrolidone (NMP), acetone, water, etc. Meanwhile, the positive electrode including a non-coated portion may be prepared by not applying the positive electrode slurry to some region of the positive electrode current collector, for example, one end of the positive electrode current collector when the positive electrode slurry is applied.

As the positive electrode current collector, various positive electrode current collectors used in the art may be used. For example, the positive electrode current collector may be stainless steel, aluminum, nickel, titanium, fired carbon, or aluminum or stainless steel having a surface treated with carbon, nickel, titanium, silver, etc. The positive electrode current collector may have fine irregularities formed on the surface thereof to increase the adhesion of the positive electrode active material. For example, the positive electrode current collector may be used in various forms such as a film, a sheet, a foil, a net, a porous body, a foam, a non-woven fabric, or the like. Most preferably, a thin aluminum film may be used in terms of elongation control and the like.

Meanwhile, as the positive electrode active material, any positive electrode active materials generally used in the art may be used.

Preferably, the positive electrode active material may include a lithium nickel-based oxide, and specifically, may include a lithium nickel-based oxide containing 80% by mol or more of Ni based on the total number of moles of transition metals. Preferably, the lithium nickel-based oxide may contain Ni in an amount of 80% by mol or more and less than 100% by mol, 82 % by mol or more and less than 100% by mol, or 83 % by mol or more and less than 100% by mol. When the lithium nickel-based oxide having a high Ni content as described above is used, a high capacity can be realized.

More specifically, the positive electrode active material may include a lithium nickel-based oxide represented by the following Chemical Formula 3:

[Chemical Formula 3] LiₓNi_{y}Co_{z}M¹_{d}M²ₑO₂

In Chemical Formula 3, M¹ may be Mn, Al, or a combination thereof, and preferably Mn or Mn and Al.

The M² may be at least one selected from the group consisting of Zr, W, Y, Ba, Ca, Ti, Mg, Ta, and Nb, and preferably at least one selected from the group consisting of Zr, Y, Mg, and Ti, and more preferably Zr, Y, or a combination thereof. The M² element is not necessarily included, but when included in an appropriate amount, it can play a role in promoting grain growth during firing or improving crystal structure stability.

The x represents a molar ratio of lithium in the lithium nickel-based oxide, and may be 0.8≤x≤1.2, 0.85≤x≤1.15, or 0.9≤x≤1.2. When the molar ratio of lithium satisfies the above range, the crystal structure of the lithium nickel-based oxide can be stably formed.

The y represents a molar ratio of nickel among all metals excluding lithium in the lithium nickel-based oxide, and may be 0.85≤y<1, 0.86≤y<1, or 0.88≤y<1. When the molar ratio of nickel satisfies the above range, a high energy density may be exhibited, thereby implementing a high capacity.

The z represents a molar ratio of cobalt among all metals excluding lithium in the lithium nickel-based oxide, and may be 0<z<0.15, 0<z<0.14, or 0.01≤z≤0.12. When the molar ratio of cobalt satisfies the above range, good resistance characteristics and output characteristics can be realized.

The d represents a molar ratio of M¹ element among all metals excluding lithium in the lithium nickel-based oxide, and may be 0<d<0.15, 0<d<0.14, or 0.01≤d≤0.12. When the molar ratio of the M¹ element satisfies the above range, the structural stability of the positive electrode active material is excellent.

The e represents a molar ratio of M² element among all metals excluding lithium in the lithium nickel-based oxide, and may be 0≤e≤0.1, or 0≤e≤0.05.

Meanwhile, the positive electrode active material according to the present invention may further include, if necessary, a coating layer containing one or more coating elements selected from the group consisting of Al, Ti, W, B, F, P, Mg, Ni, Co, Fe, Cr, V, Cu, Ca, Zn, Zr, Nb. Mo, Sr, Sb, Bi, Si and S on the surface of the lithium nickel-based oxide particles. Preferably, the coating element may be Al, B, Co, or a combination thereof, and most preferably, B.

When the coating layer is present on the surface of the lithium nickel-based oxide particle, the contact between the electrolyte and the lithium composite transition metal oxide can be suppressed by the coating layer, thereby having an effect of reducing transition metal elution or gas generation due to side reactions with the electrolyte.

The positive electrode active material may be included in an amount of 80 to 99% by weight, preferably 85 to 99% by weight, more preferably 90 to 99% by weight, based on the total weight of the positive electrode active material layer.

Meanwhile, the positive electrode active material according to the present invention may have a unimodal particle size distribution or a bimodal particle size distribution. By using the positive electrode active material having a unimodal distribution, an increase in resistance can be minimized. When a bimodal positive electrode active material is used by mixing a large-particle-diameter positive electrode active material having a large average particle diameter and a small-particle-diameter positive electrode active material having a small average particle diameter, an electrode density can be improved.

The positive electrode active material is not particularly limited in terms of its form, and may be in the form of a secondary particle in which a plurality of primary particles are aggregated, in the form of a single particle formed of one primary particle, or in the form of a combination thereof.

Preferably, the positive electrode active material may include a positive electrode active material composed of a single particle formed of one primary particle and/or a quasi-single particle that is an aggregate of 10 or less primary particles. By using, as the positive electrode active material, a positive electrode active material composed of a single particle formed of one primary particle and/or a quasi-single particle that is an aggregate of 10 or less primary particles, a large cylindrical battery having excellent safety while implementing a high capacity can be obtained.

Conventionally, it has been common to use a spherical secondary particle in which tens to hundreds of primary particles are aggregated as the positive electrode active material for a lithium secondary battery. However, in the case of a positive electrode active material in the form of a secondary particle in which a large number of primary particles are aggregated, there is a problem in that particle breakage, in which primary particles fall off, is likely to occur during the rolling process when manufacturing a positive electrode, and cracks occur inside the particles during the charging and discharging process. When the particle breakage of the positive electrode active material or cracks inside the particles are generated, the contact area with an electrolyte increases, thereby causing a problem that gas generation due to side reactions with the electrolyte is increased. If gas generation increases inside a cylindrical battery, the pressure inside the battery increases, leading to a risk of battery explosion. In particular, when the volume of the cylindrical battery is increased, the amount of active material inside the battery increases as the volume increases, and thus the amount of gas generated significantly is increased, thereby increasing the risk of firing and/or explosion of the battery.

In contrast, in the case of the positive electrode active material in the form of a single particle formed of one primary particle or a quasi-single particle in which 10 or less primary particles are aggregated, the particle breakage hardly occurs during rolling because the particle strength is higher compared to the conventional secondary particle-type positive electrode active materials in which tens to hundreds of primary particles are aggregated. In addition, in the case of a positive electrode active material in the form of a single particle or quasi-single particle, the number of primary particles constituting the particle is small, whereby there is little change in primary particles due to the volume expansion and contraction thereof during charging and discharging, and thus, the occurrence of cracks inside the particles is also significantly reduced.

Therefore, when the positive electrode active material formed of a single particle or quasi-single particle is used, the amount of gas generated due to particle breakage and internal crack can be significantly reduced, thereby implementing excellent safety even in a large cylindrical battery.

Meanwhile, the positive electrode active material formed of a single particle and/or quasi-single particle is preferably included in an amount of 95% to 100% by weight, preferably 98% to 100% by weight, more preferably 99% to 100% by weight, and even more preferably 100% by weight, based on the weight of the total positive electrode active material included in the positive electrode active material layer. When the content of the single particles and/or quasi-single particles satisfies the above range, sufficient safety can be obtained when applied to a large cylindrical battery.

Next, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, carbon fiber, and carbon nanotube; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may usually be included in an amount of 1 to 30% by weight, preferably 1 to 20% by weight, more preferably 1 to 10% by weight, based on the total weight of the positive electrode active material layer.

The binder serves to improve the bonding between the positive electrode active material particles and the adhesion between the positive electrode active material and the positive electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and any one or a mixture of two or more thereof may be used. The binder may usually be included in an amount of 1 to 30% by weight, preferably 1 to 20% by weight, more preferably 1 to 10% by weight, based on the total weight of the positive electrode active material layer.

The separator is to separate the negative electrode and the positive electrode and to provide a passage for lithium ions to move, and any separator may be used without particular limitation as long as it is generally used as the separator in the lithium secondary battery. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used as the separator. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used.

Meanwhile, the positive electrode and the negative electrode may have a non-coated portion and a coated portion. The non-coated portion may be processed in the form of a plurality of independently bendable segmental pieces, and at least a part of the plurality of segmental piece may be bent toward a winding center of the electrode assembly.

The segmental piece can be formed by processing the current collector of the positive electrode and the negative electrode through a metal foil cutting process such as laser notching, ultrasonic cutting, punching, and the like.

When the non-coated portions are processed in the form of a plurality of segmental piece, a stress applied to the non-coated portions during bending is reduced to prevent deformation or damage of the non-coated portions and to improve welding characteristics with the current collecting plate.

The current collecting plate and the non-coated portion are generally joined by welding, and the non-coated portion must be bent as flat as possible by applying a strong pressure to the welded region of the non-coated portion in order to improve the welding characteristics. However, during this bending process, the shape of the non-coated portion may be deformed by being irregularly distorted, and the deformed part may contact the opposite polar electrode to cause an internal short circuit or cause a fine crack in the non-coated portion. However, if the non-coated portions are processed in the form of a plurality of independently bendable segmental pieces, the stress applied to the non-coated portion during bending can be alleviated, thereby minimizing deformation and damage to the non-coated portion.

In addition, when the non-coated portion is processed in the form of the segmental piece as described above, overlapping occurs between the plurality of segmental pieces during bending, whereby the welding strength with the current collecting plate can be increased, and when the latest technology such as laser welding is used, it is possible to prevent a laser from penetrating into the electrode assembly and ablating the separator or the active material. Preferably, at least some of the plurality of bent segmental pieces may be overlapped on the upper and lower ends of the electrode assembly, and the current collecting plate may be coupled on the plurality of bent segmental pieces.

The lithium secondary battery according to the present invention may be a cylindrical lithium secondary battery. The cylindrical lithium secondary battery may be a large cylindrical battery having a form factor ratio (defined as a diameter of the cylindrical battery divided by its height, that is, a ratio of a diameter (Φ) to a height (H)) of 0.4 or more. Here, the form factor refers to a value representing the diameter and height of the cylindrical battery.

The cylindrical battery according to the present invention may be, for example, a 46110 cell (diameter of 46 mm, height of 110 mm, form factor ratio of 0.418), a 4875 cell (diameter of 48 mm, height of 75 mm, form factor ratio of 0.640), a 48110 cell (diameter of 48 mm, height of 110 mm, form factor ratio of 0.436), a 4880 cell (diameter of 48 mm, height of 80 mm, form factor ratio of 0.600), a 4680 cell (diameter of 46 mm, height of 80 mm, form factor ratio of 0.575), a 4695 cell (diameter of 46 mm, height of 95 mm, form factor ratio of 0.484). In the numerical value representing the form factor, the first two numbers represent the diameter of the cell, and the next two or three numbers represent the height of the cell.

The cylindrical lithium secondary battery according to the present invention can significantly reduce the amount of gas generated compared to the prior art, and thus, can implement excellent safety even in a large cylindrical battery having a form factor ratio of 0.4 or more.

Meanwhile, the cylindrical battery according to the present invention is a battery having a tab-less structure that does not include an electrode tab. The cylindrical lithium secondary battery of the present invention may have a structure in which at least a part of the non-coated portion of the negative electrode defines an electrode tab, that is, a tap-less structure. In addition, the cylindrical lithium secondary battery of the present invention may have a structure in which at least a part of the non-coated portion of the negative electrode defines an electrode tab, that is, a tap-less structure. Specifically, the non-coated portion may be formed at one side end of the current collector to be elongated along the winding direction, and a battery having the tab-less structure can be implemented by coupling a current collecting plate to each of the positive electrode non-coated portion and the negative electrode non-coated portion and connecting the current collecting plate to an electrode terminal.

For example, the battery having a tap-less structure can be manufactured through the following method. First, a separator, a positive electrode, a separator, and a negative electrode are sequentially stacked so that the non-coated portions of the positive electrode and the negative electrode are located in opposite directions, and then wound in one direction to manufacture a jelly-roll type electrode assembly. Then, the non-coated portions of the positive electrode and the negative electrode are bent in a direction of the winding center; a current collecting plate is welded and joined to each of the non-coated portions of the positive electrode and the negative electrode; and then the current collecting plate is connected to an electrode terminal, thereby manufacturing the battery having a tap-less structure. Meanwhile, the current collecting plate has a larger cross-sectional area compared to a strip-type electrode tab, and resistance is inversely proportional to a cross-sectional area of a passage through which current flows. Therefore, when the secondary battery is formed with the above structure, the cell resistance can be greatly reduced. In addition, when a cylindrical lithium secondary battery is formed with the tap-less structure as described above, the current concentration is less compared to the conventional battery with electrode tabs, whereby heat generation inside the battery can be effectively reduced, and thus the thermal safety of the battery can be improved.

The battery can is electrically connected to the non-coated portion of the electrode and functions as an electrode terminal which contacts an external power source to transfer a current applied from the external power source to the electrode.

The electrolyte used in the cylindrical lithium secondary battery of the present invention may include a lithium salt, an organic solvent, and an additive.

The lithium salt is used as an electrolyte salt in the lithium secondary battery and as a medium for transferring ions. Typically, the lithium salt may contain, for example, Li⁺ as a cation and at least one selected from the group consisting of F⁻, Cl⁻, Br⁻, I⁻, NO₃⁻, N(CN)₂, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include any one or a mixture of two or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis(fluorosulfonyl)imide; LiFSI), LiN(SO₂CF₂CF₃)₂ (lithium bis(perfluoroethanesulfonyl)imide; LiBETI), and LiN(SO₂CF₃)₂ (lithium bis(trifluometanesulfonyl) imide; LiTFSI). In addition, any lithium salt commonly used in the electrolytes of lithium secondary batteries may be used without limitation.

The lithium salt may be included in the electrolyte at a concentration of 1.0 M to 1.5 M, preferably 1.1 M to 1.3 M, in order to realize optimal electrolyte impregnation for a large-capacity cylindrical lithium secondary battery. When the concentration of the lithium salt satisfies the above range, the effect of improving cycle characteristics is sufficient when the lithium secondary battery is stored at high temperatures, and the viscosity of the non-aqueous electrolyte may be appropriate, thereby improving electrolyte impregnation.

The organic solvent may include at least one organic solvent selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixed organic solvent thereof.

The cyclic carbonate-based organic solvent is a high-viscosity organic solvent that has a high dielectric constant and thus can easily dissociate the lithium salt in the electrolyte, and as specific examples thereof, may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and particularly, may include ethylene carbonate.

**In** addition, the linear carbonate-based organic solvent is an organic solvent having a low viscosity and a low dielectric constant, and as representative examples thereof, may include at least one organic solvent selected from the group consisting of dimethyl carbonate (DMC), diethyl carbonate (DEC), dipropyl carbonate, ethyl methyl carbonate (EMC), methyl propyl carbonate, and ethyl propyl carbonate, and specifically, ethyl methyl carbonate (EMC).

**In** addition, in order to produce an electrolyte having a high ion conductivity, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent.

Specific examples of such linear ester-based organic solvents may include at least one organic solvent selected from the group consisting of methyl acetate, ethyl acetate, propyl acetate, methyl propionate, ethyl propionate, propyl propionate, and butyl propionate.

In addition, the cyclic ester-based organic solvent may include at least one organic solvent selected from the group consisting of γ-butyrolactone, γ-valerolactone, γ-caprolactone, σ-valerolactone, and ε-caprolactone.

Meanwhile, the organic solvent may be used by adding, without limitation, an organic solvent commonly used in a non-aqueous electrolyte as needed. For example, at least one organic solvent of an ether-based organic solvent, a glyme-based solvent, and a nitrile-based organic solvent may be further included.

The ether-based solvent may be any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more thereof, but is not limited thereto.

The glyme-based solvent is a solvent having a higher dielectric constant and a lower surface tension than a linear carbonate-based organic solvent and having less reactivity with metal, and may include at least one selected from the group consisting of dimethoxyethane (glyme, DME), diethoxyethane, diglyme, tri-glyme, and tetra-glyme (TEGDME), but is not limited thereto.

The nitrile-based solvent may be at least one selected from the group consisting of acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluoroobenzonitrile, phenylacetonitrile, 2-fluorophenylacetonitrile, and 4-fluorophenylacetonitrile, but is not limited thereto.

The non-aqueous electrolyte of the present invention may include an electrolyte additive in order to prevent the non-aqueous electrolyte from decomposing in a high-power environment to cause negative electrode collapse, or in order to further improve low-temperature high-rate discharge characteristics, high-temperature stability, overcharge prevention, and effect of battery expansion inhibition at high temperatures, etc.

The electrolyte additive may include, as representative examples thereof, at least one additive for forming an SEI film selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may be a vinylene carbonate (VC) or a vinyl ethylene carbonate.

The halogen-substituted carbonate-based compound may be a fluoroethylene carbonate (FEC).

The sultone-based compound may be at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may be ethylene sulfate (Esa), trimethylene sulfate (TMS), or methyl trimethylene sulfate (MTMS).

The phosphate-based compound may be at least one compound selected from the group consisting of lithium difluoro(bisoxalato) phosphate, lithium difluorophosphate, tris(trimethylsilyl) phosphate, tris(trimethyl silyl) phosphite, tris(2,2,2-trifluoroethyl) phosphate, and tris(2,2,2-trifluoroethyl) phosphite.

The borate-based compound may be tetraphenyl borate, lithium oxalyl difluoroborate (LiODFB), and lithium bisoxalatoborate (LiB(C₂O₄)₂, LiBOB).

The nitrile-based compound may be at least one compound selected from the group consisting of succinonitrile, adiponitrile, acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylene diamine, and the silane-based compound may include tetravinylsilane.

The lithium salt-based compound is different from the lithium salt included in the non-aqueous electrolyte, and may include lithium difluorophosphate (LiDFP), LiPO₂F₂ or LiBF₄.

Hereinafter, the present invention will be described in more detail by way of specific examples.

### EXAMPLES

### Example 1

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1605 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 13.2 mm, a was measured to be 0.00122.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 1 mm. In the prepared electrode assembly, a(b+2c) was calculated to be 0.0821.

The electrode assembly prepared as described above was inserted into a cylindrical battery can, and then an electrolyte was injected to prepare a 4680 cell.

### Example 2

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1592 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 13.0 mm, a was measured to be 0.00122.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 2 mm. In the prepared electrode assembly, a(b+2c) was calculated to be 0.0845.

The electrode assembly prepared as described above was inserted into a cylindrical battery can, and then an electrolyte was injected to prepare a 4680 cell.

### Example 3

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1580 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 13.0 mm, a was measured to be 0.00122.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 3 mm. In the prepared electrode assembly, a(b+2c) was calculated to be 0.0870.

The electrode assembly prepared as described above was inserted into a cylindrical battery can, and then an electrolyte was injected to prepare a 4680 cell.

### Example 4

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1595 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 12.2 mm, a was measured to be 0.00131.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 1 mm. In the prepared electrode assembly, a(b+2c) was calculated to be 0.0881.

The electrode assembly prepared as described above was inserted into a cylindrical battery can, and then an electrolyte was injected to prepare a 4680 cell.

### Example 5

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1582 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 12.1 mm, a was measured to be 0.00131.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 2 mm. In the prepared electrode assembly, a(b+2c) was calculated to be 0.0907.

The electrode assembly prepared as described above was inserted into a cylindrical battery can, and then an electrolyte was injected to prepare a 4680 cell.

### Example 6

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1569 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 12.0 mm, a was measured to be 0.00131.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 3 mm. In the prepared electrode assembly, a(b+2c) was calculated to be 0.0933.

The electrode assembly prepared as described above was inserted into a cylindrical battery can, and then an electrolyte was injected to prepare a 4680 cell.

### Comparative Example 1

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1605 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 2.7 mm, a was measured to be 0.00590.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 1 mm. In the prepared electrode assembly, a(b+2c) was calculated to be 0.3954.

The electrode assembly prepared as described above was inserted into a cylindrical battery can, and then an electrolyte was injected to prepare a 4680 cell.

### Comparative Example 2

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1546 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 2.6 mm, a was measured to be 0.00590.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 2 mm. In the prepared electrode assembly, a(b+2c) was calculated to be 0.4072.

The electrode assembly prepared as described above was inserted into a cylindrical battery can, and then an electrolyte was injected to prepare a 4680 cell.

### Comparative Example 3

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1487 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 2.5 mm, a was measured to be 0.00590.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 3 mm. In the prepared electrode assembly, a(b+2c) was calculated to be 0.4191.

The electrode assembly prepared as described above was inserted into a cylindrical battery can, and then an electrolyte was injected to prepare a 4680 cell.

### Comparative Example 4

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1595 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 2.0 mm, a was measured to be 0.00803.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 1 mm. In the prepared electrode assembly, a(b+2c) was calculated to be 0.5380.

The electrode assembly prepared as described above was inserted into a cylindrical battery can, and then an electrolyte was injected to prepare a 4680 cell.

### Comparative Example 5

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1515 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 1.9 mm, a was measured to be 0.00803.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 2 mm. In the prepared electrode assembly, a(b+2c) was calculated to be 0.5540.

The electrode assembly prepared as described above was inserted into a cylindrical battery can, and then an electrolyte was injected to prepare a 4680 cell.

### Comparative Example 6

A negative electrode active material (a mixture of graphite: SiO in a weight ratio of 96.5:3.5), a conductive material (carbon nanotube), styrene-butadiene rubber (SBR), and carboxymethyl cellulose (CMC) were mixed in water at a weight ratio of 98:0.05:1.1:0.85 to prepare a negative electrode slurry. The negative electrode slurry was applied to one surface of a copper current collector sheet, dried at 150°C, and rolled to prepare a negative electrode. A thickness (t) of the negative electrode active material layer in the prepared negative electrode is 0.1435 mm, and a length (x) of the negative electrode is 70 mm. In addition, a distance (△x) in the longitudinal direction between a boundary point between the first region where the thickness of the negative electrode active material layer is constant and the second region where the thickness of the negative electrode active material layer decreases and a point where the thickness of the negative electrode active material layer in the second region is 0.9t was measured to be 1.8 mm, a was measured to be 0.00803.

A positive electrode slurry was prepared by mixing a nickel cobalt manganese-based lithium oxide (NCM) as a positive electrode active material, a carbon nanotube, and a PVDF binder at a weight ratio of 97.8:0.6:1.6 in N-methyl pyrrolidone. The positive electrode slurry was applied to one surface of an aluminum current collector sheet, dried at 120°C, and rolled to prepare a positive electrode.

A separator was interposed between the positive electrode and the negative electrode, which were stacked in the order of separator/positive electrode/separator/negative electrode, and then wound to prepare an electrode assembly. Here, a length (b) of the positive electrode active material layer facing the first region where the thickness of the negative electrode active material layer is constant was 65 mm, and a length (c) of the positive electrode active material layer facing the second region where the thickness of the negative electrode active material layer decreases was 3 mm. In the prepared electrode assembly, a(b+2c) was calculated to be 0.5701.

The electrode assembly prepared as described above was inserted into a cylindrical battery can, and then an electrolyte was injected to prepare a 4680 cell.

### Experimental Example

For the 4680 cells of Examples 1 to 6 and Comparative Examples 1 to 6, initial capacities were measured. The initial capacities were measured by charging under CC/CV conditions at 1/3C, 4.2V, and 1/100C cut-off and discharging under CC conditions of 19.1W and 2.5V cut-off.

**[Table 1]**

| | t | a(b+2c) | Initial capacity (mAh) |
|---|---|---|---|
| Example 1 | 0.1605 | 0.0821 | 96,818 |
| Example 2 | 0.1592 | 0.0845 | 97,137 |
| Example 3 | 0.1580 | 0.0870 | 97,033 |
| Example 4 | 0.1595 | 0.0881 | 96,798 |
| Example 5 | 0.1582 | 0.0907 | 97,103 |
| Example 6 | 0.1569 | 0.0933 | 96,992 |
| Comparative Example 1 | 0.1605 | 0.3954 | 96,605 |
| Comparative Example 2 | 0.1546 | 0.4072 | 96,512 |
| Comparative Example 3 | 0.1487 | 0.4191 | 95,987 |
| Comparative Example 4 | 0.1595 | 0.5380 | 96,643 |
| Comparative Example 5 | 0.1515 | 0.5540 | 96,578 |
| Comparative Example 6 | 0.1435 | 0.5701 | 95,850 |

As shown in Table 1, it can be seen that Examples 1 to 6, in which the value of the thickness (t) of the negative electrode active material layer was greater than the value of a(b+2c), exhibited high initial capacities due to small loss of cell capacities, whereas the 4680 cells of Comparative Examples 1 to 6, in which the value of the thickness (t) of the negative electrode active material layer was smaller than the value of a(b+2c), had low initial capacities.

### [Description of Reference Numerals]

10: positive electrode
11: positive electrode current collector
12: positive electrode active material layer
20: separator
30: negative electrode
31: negative electrode active material layer
32: negative electrode current collector

## Claims

1. An electrode assembly in which a positive electrode, a negative electrode, and a separator interposed between the positive electrode and the negative electrode are wound in one direction,
wherein the positive electrode includes a positive electrode current collector and a positive electrode active material layer,
wherein the negative electrode includes a non-coated portion in which a negative electrode active material layer is not formed on the negative electrode current collector, and a coated portion in which the negative electrode active material layer is formed on the negative electrode current collector,
wherein the coated portion includes a first region where a thickness of the negative electrode active material layer is constant, and a second region where a thickness of the negative electrode active material layer decreases, and
wherein the electrode assembly satisfies the following Equation (1): $t \geq a \left(b+2c\right)$
wherein t is a thickness (mm) of the negative electrode active material layer in the first region, b is a length (mm) in which the first region and the positive electrode active material layer face each other, c is a length (mm) in which the second region and the positive electrode active material layer face each other, and
a is a value represented by the following Equation (2): $a = 0.1 t / Δx$
wherein △x is a longitudinal distance (mm) between a boundary point between the first region and the second region and a point where a thickness of the negative electrode active material layer in the second region is 0.9t.

2. The electrode assembly according to claim 1, wherein the a is 0.0001 to 0.01.

3. The electrode assembly according to claim 1, wherein the b is 60 mm to 69 mm.

4. The electrode assembly according to claim 1, wherein the c is 0.1 to 5 mm.

5. The electrode assembly according to claim 1, wherein the length (x) of the negative electrode active material layer is 60 mm to 95 mm.

6. The electrode assembly according to claim 1, wherein the t is 0.100 mm to 0.180 mm.

7. The electrode assembly according to claim 1, wherein the c/b in Equation (1) is 0.22 or less.

8. The electrode assembly according to claim 1, wherein the negative electrode current collector is a thin copper film.

9. The electrode assembly according to claim 1, wherein the negative electrode active material included in the negative electrode active material layer is formed of a mixture of graphite and SiO.

10. The electrode assembly according to claim 9, wherein the SiO is included in an amount of 1 to 5% by weight based on the total weight of the negative electrode active material.

11. A lithium secondary battery including: the electrode assembly of claim 1; an electrolyte; and a battery can accommodating the electrode assembly and the electrolyte.

12. The lithium secondary battery according to claim 11, wherein the lithium secondary battery is cylindrical.

13. The lithium secondary battery according to claim 12, wherein the lithium secondary battery has a form factor ratio of 0.4 or more.

14. The lithium secondary battery according to claim 11, wherein the lithium secondary battery has a structure in which at least a part of the non-coated portion of the negative electrode defines an electrode tab.

## Patentansprüche

1. Elektrodenanordnung, in der eine positive Elektrode, eine negative Elektrode und ein Separator, der zwischen der positiven Elektrode und der negativen Elektrode angeordnet ist, in einer Richtung gewickelt sind,
wobei die positive Elektrode einen Positivelektrode-Stromabnehmer und eine Positivelektrode-Aktivmaterialschicht aufweist,
wobei die negative Elektrode einen unbeschichteten Abschnitt, in dem keine Negativelektrode-Aktivmaterialschicht auf dem Negativelektrode-Stromabnehmer ausgebildet ist, und einen beschichteten Abschnitt, in dem eine Negativelektrode-Aktivmaterialschicht auf dem Negativelektrode-Stromabnehmer ausgebildet ist, aufweist,
wobei der beschichtete Abschnitt einen ersten Bereich, in dem eine Dicke der Negativelektrode-Aktivmaterialschicht konstant ist, und einen zweiten Bereich, in dem eine Dicke der Negativelektrode-Aktivmaterialschicht abnimmt, aufweist, und
wobei die Elektrodenanordnung die folgende Gleichung (1) erfüllt: Gleichung (1): $t \geq a \left(b+2c\right)$
wobei t eine Dicke (mm) der Negativelektrode-Aktivmaterialschicht in dem ersten Bereich ist, b eine Länge (mm) ist, in der der erste Bereich und die Positivelektrode-Aktivmaterialschicht einander zugewandt sind, c eine Länge (mm) ist, in der der zweite Bereich und die Positivelektrode-Aktivmaterialschicht einander zugewandt sind, und
a ein Wert ist, der durch die folgende Gleichung (2) dargestellt ist: Gleichung (2): $a = 0 , 1 t / Δ x$
wobei △x ein Längsabstand (mm) zwischen einem Grenzpunkt zwischen dem ersten Bereich und dem zweiten Bereich und einem Punkt ist, an dem eine Dicke der Negativelektrode-Aktivmaterialschicht in dem zweiten Bereich 0,9 t beträgt.

2. Elektrodenanordnung nach Anspruch 1, wobei a 0,0001 bis 0,01 beträgt.

3. Elektrodenanordnung nach Anspruch 1, wobei b 60 mm bis 69 mm beträgt.

4. Elektrodenanordnung nach Anspruch 1, wobei c 0,1 bis 5 mm beträgt.

5. Elektrodenanordnung nach Anspruch 1, wobei die Länge (x) der Negativelektrode-Aktivmaterialschicht 60 mm bis 95 mm beträgt.

6. Elektrodenanordnung nach Anspruch 1, wobei t 0,100 mm bis 0,180 mm beträgt.

7. Elektrodenanordnung nach Anspruch 1, wobei c/b in Gleichung (1) 0,22 oder weniger beträgt.

8. Elektrodenanordnung nach Anspruch 1, wobei der Negativelektrode-Stromabnehmer ein dünner Kupferfilm ist.

9. Elektrodenanordnung nach Anspruch 1, wobei das Negativelektrode-Aktivmaterial, das in der Negativelektrode-Aktivmaterialschicht enthalten ist, aus einer Mischung aus Graphit und SiO gebildet ist.

10. Elektrodenanordnung nach Anspruch 9, wobei das SiO in einer Menge von 1 bis 5 Gew.-%, bezogen auf das Gesamtgewicht des Negativelektrode-Aktivmaterials, enthalten ist.

11. Lithium-Sekundärbatterie, aufweisend: die Elektrodenanordnung nach Anspruch 1; einen Elektrolyten; und eine Batteriedose, die die Elektrodenanordnung und den Elektrolyten aufnimmt.

12. Lithium-Sekundärbatterie nach Anspruch 11, wobei die Lithium-Sekundärbatterie zylindrisch ist.

13. Lithium-Sekundärbatterie nach Anspruch 12, wobei die Lithium-Sekundärbatterie ein Formfaktorverhältnis von 0,4 oder mehr aufweist.

14. Lithium-Sekundärbatterie nach Anspruch 11, wobei die Lithium-Sekundärbatterie eine Struktur aufweist, in der zumindest ein Teil des unbeschichteten Abschnitts der negativen Elektrode eine Elektrodenlasche definiert.

## Revendications

1. Ensemble d'électrodes dans lequel une électrode positive, une électrode négative, et un séparateur intercalé entre l'électrode positive et l'électrode négative, sont enroulés dans une direction,
l'électrode positive comprenant un collecteur de courant d'électrode positive et une couche de matière active d'électrode positive,
l'électrode négative comprenant une section non revêtue dans laquelle une couche de matière active d'électrode négative n'est pas formée sur le collecteur de courant d'électrode négative, et une partie revêtue dans laquelle la couche de matière active d'électrode négative est formée sur le collecteur de courant d'électrode négative,
la partie revêtue comprenant une première zone dans laquelle une épaisseur de la couche de matière active d'électrode négative est constante, et une deuxième zone dans laquelle une épaisseur de la couche de matière active d'électrode négative est décroissante, et
l'ensemble d'électrodes répondant à l'équation (1) suivante : Équation (1) : $t \geq a \left(b+2c\right)$
T étant une épaisseur (mm) de la couche de matière active d'électrode négative dans la première zone, b étant une longueur (mm) dans laquelle la première zone et la couche de matière active d'électrode positive se font face, c étant une longueur (mm) dans laquelle la deuxième zone et la couche de matière active d'électrode positive se font face, et
a étant une valeur représentée par l'équation (2) suivante : Équation (2) : $a = 0 , 1 t / Δ x$
△x étant une distance longitudinale (mm) entre un point de démarcation entre la première zone et la deuxième zone, et un point auquel une épaisseur de la couche de matière active d'électrode négative dans la deuxième zone est 0,9t.

2. Ensemble d'électrodes selon la revendication 1, a allant de 0,0001 à 0,01.

3. Ensemble d'électrodes selon la revendication 1, b allant de 60 mm à 69 mm.

4. Ensemble d'électrodes selon la revendication 1, c allant de 0,1 à 5 mm.

5. Ensemble d'électrodes selon la revendication 1, la longueur (x) de la couche de matière active d'électrode négative mesurant de 60 mm à 95 mm.

6. Ensemble d'électrodes selon la revendication 1, t allant de 0,100 mm à 0,180 mm.

7. Ensemble d'électrodes selon la revendication 1, c/b dans l'équation (1) étant 0,22 ou moins.

8. Ensemble d'électrodes selon la revendication 1, le collecteur de courant de l'électrode négative étant une pellicule de cuivre mince.

9. Ensemble d'électrodes selon la revendication 1, la matière active d'électrode négative comprise dans la couche de matière active d'électrode négative étant composée d'un mélange de graphite et de SiO.

10. Ensemble d'électrodes selon la revendication 9, le SiO étant compris dans la mesure de 1 à 5% en poids d'après le poids total de la matière active d'électrode négative.

11. Batterie secondaire au lithium comprenant : l'ensemble d'électrodes selon la revendication 1 ; un électrolyte ; et un boîtier de batterie contenant l'ensemble d'électrodes et l'électrolyte.

12. Batterie secondaire au lithium selon la revendication 11, la batterie secondaire au lithium étant cylindrique.

13. Batterie secondaire au lithium selon la revendication 12, la batterie secondaire au lithium présentant un rapport de facteur de forme de 0,4 ou davantage.

14. Batterie secondaire au lithium selon la revendication 11, la batterie secondaire au lithium présentant une structure dans laquelle au moins une partie de la section non revêtue de l'électrode négative définit une languette d'électrode.
